# EUROPEAN PATENT APPLICATION

(11) **EP 4 760 202 A1**
(43) Date of publication of application: **17.06.2026**
(21) Application number: 25854509.4
(22) Date of filing: 02.07.2025
(51) Int. Cl.: G01B 15/04, G01B 15/08, G01N 23/046, H01M 10/42

(54) **BATTERY SHAPE INSPECTION APPARATUS AND METHOD**

(30) Priority: 12.08.2024 KR 20240107283
(71) Applicant: LG Energy Solution, Ltd., Seoul 07335 (KR)
(72) Inventor: KANG, Myeonghoon, Daejeon 34122 (KR); OH, Sangjin, Daejeon 34122 (KR); EOM, Donghwan, Daejeon 34122 (KR); LIM, Jihun, Daejeon 34122 (KR); HONG, Seung Gyun, Daejeon 34122 (KR)
(74) Representative: Goddar, Heinz J.
(86) International application number: PCT/KR2025/009409
(87) International publication number: WO 2026/038696

(57) **Abstract**

A battery shape inspection apparatus according to one embodiment of the present invention may comprise: at least one processor; and memory for storing at least one command executed through the at least one processor. Here, the at least one command can includes the commands of: acquiring a vertical cross-sectional image of a battery; defining, in the vertical cross-sectional image, a reference line passing through an area of a crimping unit; and calculating the flatness of the crimping unit by using the intersection point of the reference line and the area of the crimping unit.

## Description

### [Technical Field]

This application claims priority to and the benefit of Korean Patent Application No.10-2024-0107283 filed in the Korean Intellectual Property Office on August 12, 2024 the entire contents of which are incorporated herein by reference.

The present invention relates to an apparatus and method for inspecting battery shape, and more particularly, to an apparatus and method for inspecting battery shape that uses CT data of a battery to measure one or more dimensions related to the shape of the battery.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

Secondary batteries may be classified into can-type batteries, in which the electrode assembly is housed in a cylindrical metal can, and pouch-type batteries, in which the electrode assembly is housed in a pouch-shaped case. Cylindrical can-type batteries are generally known to have a relatively large capacity and high structural stability.

Cylindrical batteries may be manufactured through processes such as an electrode manufacturing process, an electrode assembly manufacturing process, an electrode assembly insertion process, and a can assembly joining process. A quality inspection process for batteries may be performed during a manufacturing process and the final stage of manufacturing a cylindrical battery.

Battery shape inspection is a process to determine whether a battery's shape is formed as intended. Typically, this process involves using an image of the battery's exterior to measure dimensions such as its total height, outer diameter, and bead height.

This image-based shape inspection only examines dimensions visible from the battery's exterior, and cannot inspect areas obscured by the exterior.

Among the prior art documents relevant to the present invention, KR 10-2024-0026118 A is of some relevance.

### [Detailed Description of the Invention]

### [Technical Problem]

To obviate one or more problems of the related art, embodiments of the present disclosure provide a battery shape inspection apparatus that uses CT data to measure one or more dimensions related to the shape of a battery.

To obviate one or more problems of the related art, embodiments of the present disclosure also provide a battery shape inspection method using the battery shape inspection apparatus.

To obviate one or more problems of the related art, embodiments of the present disclosure also provide a battery shape inspection system including the battery shape inspection apparatus.

### [Technical Solution]

In order to achieve the objective of the present disclosure, a battery shape inspection apparatus according to embodiments of the present invention may include at least one processor; and a memory configured to store at least one instruction executed by the at least one processor.

Here, the at least one instruction may include an instruction to obtain a vertical cross-sectional image of a battery; an instruction to define a reference line passing through an area of a crimping region in the vertical cross-sectional image; and an instruction to calculate a flatness of the crimping region using intersections of the reference line and the area of the crimping region.

The instruction to obtain the vertical cross-sectional image of the battery may include an instruction to obtain computed tomography (CT) data of the battery from a computed tomographic imaging device; and an instruction to extract the vertical cross-sectional image including the area of the crimping region from the CT data.

The instruction to define the reference line may include an instruction to define a reference point on an outline of the crimping region; an instruction to define a parallel line tangent to the reference point; an instruction to vertically move the parallel line by a predetermined distance so that the parallel line passes through the area of the crimping region; and an instruction to define the vertically moved parallel line as the reference line.

The instruction to define the reference point may include an instruction to define the uppermost point on the outline of the upper surface of the crimping region as the reference point; and the instruction to vertically move the parallel line by a predetermined distance may include an instruction to move the parallel line downward by a predetermined distance.

The instruction to define the reference point may include an instruction to define the uppermost point on the outline of the lower surface of the crimping region as the reference point, and the instruction to vertically move the parallel line by a predetermined distance may include an instruction to move the parallel line downward by a predetermined distance.

The instruction to calculate the flatness may include an instruction to identify a first intersection point and a second intersection point where the reference line intersects the area of the crimping region; and an instruction to calculate the flatness based on a horizontal distance between the first intersection point and the second intersection point.

The instruction to calculate the flatness may include an instruction to calculate a flatness of one part of the crimping region; and an instruction to calculate a flatness of the other part of the crimping region.

The at least one instruction may further include an instruction to determine whether the battery is defective based on whether the calculated flatness exceeds a predetermined allowable range.

The at least one instruction may further include an instruction to acquire a first vertical cross-sectional image of an upper portion of the battery and a second vertical cross-sectional image of a lower portion of the battery; an instruction to measure a first distance, which is a vertical distance of a battery portion, in the first vertical cross-sectional image, and a second distance, which is a vertical distance of the battery portion, in the second vertical cross-sectional image; and an instruction to calculate a height distance of the battery by adding a pre-stored third distance corresponding to a central portion of the battery to the sum of the first and second distances.

According to another embodiment of the present disclosure, a battery shape inspection method for inspecting battery shape according to embodiments of the present invention may include: a step of obtaining a vertical cross-sectional image of a battery; a step of defining a reference line passing through an area of a crimping region in the vertical cross-sectional image; and a step of calculating a flatness of the crimping region using intersections of the reference line and the area of the crimping region.

The step of obtaining of the vertical cross-sectional image of the battery may include a step of obtaining computed tomography (CT) data of the battery from a computed tomographic imaging device; and a step of extracting the vertical cross-sectional image including the area of the crimping region from the CT data.

The step of defining of the reference line may include a step of defining a reference point on an outline of the crimping region; a step of defining a parallel line tangent to the reference point; a step of vertically moving the parallel line by a predetermined distance so that the parallel line passes through the area of the crimping region; and a step of defining the vertically moved parallel line as the reference line.

The step of defining of the reference point may include a step of defining the uppermost point on the outline of the upper surface of the crimping region as the reference point; and the step of the vertically moving of the parallel line by a predetermined distance includes: a step of moving the parallel line downward by a predetermined distance.

The step of defining of the reference point may include a step of defining the uppermost point on the outline of the lower surface of the crimping region as the reference point; and the step of the vertically moving of the parallel line by a predetermined distance may include a step of moving the parallel line downward by a predetermined distance.

The step of calculating of the flatness may include a step of identifying a first intersection point and a second intersection point where the reference line intersects the area of the crimping region; and a step of calculating the flatness based on a horizontal distance between the first intersection point and the second intersection point.

The step of calculating of the flatness may include a step of calculating a flatness of one part of the crimping region; and a step of calculating a flatness of the other part of the crimping region.

The method for inspecting battery shape may further include a step of determining whether the battery is defective based on whether the calculated flatness exceeds a predetermined allowable range.

The battery shape inspection method may further include a step of acquiring a first vertical cross-sectional image of an upper portion of the battery and a second vertical cross-sectional image of a lower portion of the battery; a step of measuring a first distance, which is a vertical distance of a battery portion, in the first vertical cross-sectional image, and a second distance, which is a vertical distance of the battery portion, in the second vertical cross-sectional image; and a step of calculating a height distance of the battery by adding a pre-stored third distance corresponding to a central portion of the battery to the sum of the first and second distances.

According to another embodiment of the present disclosure, a battery shape inspection system may include a computed tomographic (CT) imaging device configured to generate CT data of a battery; and a battery shape inspection apparatus configured to obtain the CT data from the CT imaging device, calculate one or more dimensions related to the shape of the battery using a vertical cross-sectional image extracted from the CT data, and determine whether the battery has a shape defect based on the calculated dimensions.

Here, the battery shape inspection apparatus may define a reference line passing through an area of a crimping region in the vertical cross-sectional image and calculates a flatness of the crimping region using intersections of the reference line and the area of the crimping region.

### [Advantageous Effects]

According to embodiments of the present disclosure, it is possible to measure dimensions that are not visible from the outside of the battery using vertical cross-sectional images obtained from CT data of the battery.

### [Brief Description of the Drawings]

FIG. 1 is a reference diagram illustrating a general battery shape inspection method.
FIG. 2 illustrates the internal structure of the upper region of a cylindrical battery cell.
FIG. 3 is a block diagram of a battery shape inspection system according to embodiments of the present invention.
FIG. 4 is a side view of a CT device according to embodiments of the present invention.
FIG. 5 is an operational flowchart of a battery shape inspection method according to an embodiment of the present invention.
FIG. 6 is a reference diagram illustrating the battery shape inspection method according to an embodiment of the present invention.
FIG. 7 is an operational flowchart of a battery shape inspection method according to another embodiment of the present invention.
FIGS. 8 to 10 are reference diagrams for explaining the battery shape inspection method according to another embodiment of the present invention.
FIG. 11 is a reference diagram illustrating a battery shape inspection method according to another embodiment of the present invention.
FIG. 12 is a block diagram of a battery shape inspection apparatus according to embodiments of the present invention.

100: battery
200: CT device
300, 1200: battery shape inspection apparatus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, the present invention and exemplary embodiments of the present invention will be described in detail with reference to the accompanying drawings.

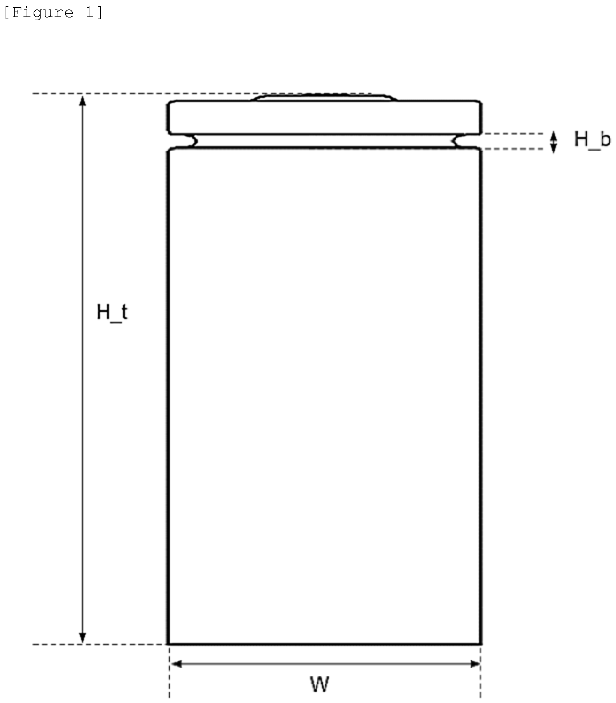

FIG. 1 is a reference diagram for explaining a general battery shape inspection method.

The battery shape inspection is an inspection to determine whether the battery shape is formed as intended. Typically, it is performed by measuring dimensions related to the battery shape using one or more images capturing the battery's exterior.

For example, referring to FIG. 1, a battery shape inspection apparatus may measure dimensions such as the total height H_t, outer diameter W, and bead height H_b of the battery using an image captured from a side of the battery. Thereafter, the battery shape inspection apparatus may compare the measured dimensions with predetermined allowable ranges for each dimension to determine whether the battery has a shape defect.

Since this image-based shape inspection apparatus performs inspection based on an image of the battery's exterior captured from the outside, it is impossible to inspect areas obscured by the battery's exterior.

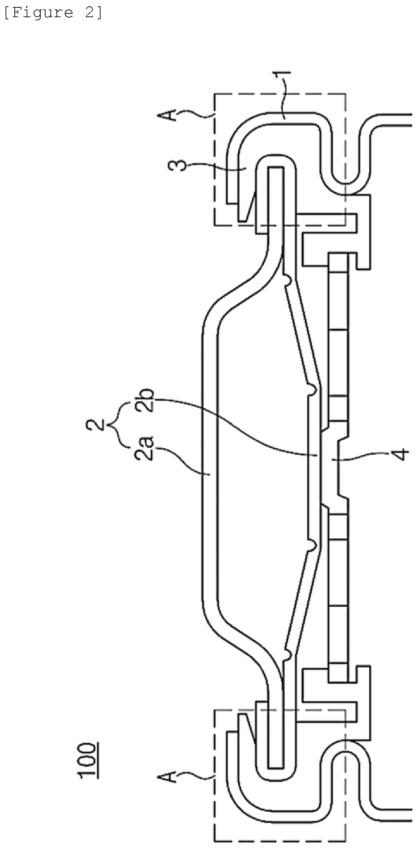

FIG. 2 illustrates the internal structure of the upper portion of a cylindrical battery cell.

Referring to FIG. 2, the cylindrical battery cell may comprise: a can 1 with an opening formed therein; a cap assembly 2 including a top cap 2a that seals the opening, a vent 2b that discharges gas inside the can 1; a gasket 3 that is provided between the can 1 and the cap assembly 2 and has elasticity and insulation; and a current interrupt device (CID) 4 that is provided below the vent 2b and interrupts current when the temperature exceeds a certain level. Here, the can 1, the cap assembly 2, and the gasket 3 may be joined (area A) through a crimping process that applies physical force to the end of the can 1.

In order to more precisely determine whether the battery has been formed as intended, various dimensions needs to be measured, such as the thickness of the crimping portion, the flatness of the crimping portion, the thickness of the gasket 3, the thickness of the vent 2b, the horizontal distance between the outer side surface of the battery and the end of the vent 4, and the horizontal length of the gasket 3 protruding outward.

However, as described with reference to FIG. 1, a general shape inspection apparatus has limitations in the accuracy of selecting good-quality batteries because it is impossible to inspect parts covered by the outer surface of the battery.

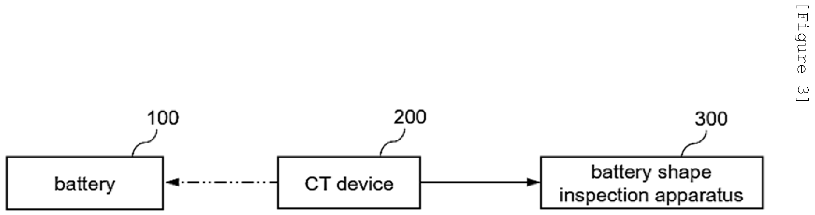

FIG. 3 is a block diagram of a battery shape inspection system according to embodiments of the present invention.

The battery shape inspection system according to embodiments of the present invention may be utilized in a process step of inspecting a battery 100 for shape defects.

The battery shape inspection system may include a CT device 200 positioned at a specific location to take a CT scan of the battery 100 and generate CT data, and a battery shape inspection apparatus 300 that acquires CT data from the CT device 200 and uses the CT data to calculate one or more dimensions related to the shape of the battery 100.

The battery 100 according to embodiments of the present invention may correspond to a cylindrical battery cell, but the scope of the present invention is not limited thereto.

The CT device 200 may generates CT data of the battery 100. Here, the CT data may refer to three-dimensional image data synthesized from cross-sectional images of the inside of the battery 100.

For example, the CT device 200 may irradiate X-rays from the side of the battery 100 and detect X-rays that have passed through the inside of the battery 100 to obtain a slice image. Here, the CT device 200 may obtain a plurality of slice images (e.g., 360 images) as the battery 100 sequentially rotates by a unit angle (e.g., 1 degree), and synthesize the slice images using a predefined reconstruction algorithm to generate CT data representing the internal shape of the battery.

The CT device 200 may be placed on a battery transport line and generate CT data for each of the plurality of batteries. Here, the CT device 200 may sequentially generate CT data for each of the batteries by using a gripper to hold the battery cells and restoring the slice images obtained during the rotation of the gripper.

The battery shape inspection apparatus 300 may acquire CT data of the battery 100 from the CT device 200 and use the CT data to calculate one or more dimensions related to the shape of the battery 100.

The battery shape inspection apparatus 300 may extract a vertical cross-sectional image of the battery 100 from the CT data and use the extracted vertical cross-sectional image to calculate one or more dimensions related to the shape of the battery 100.

The battery shape inspection apparatus 300 may determine whether the battery has a defective shape by comparing the dimensions calculated using the vertical cross-sectional image of the battery 100 with a predefined allowable range.

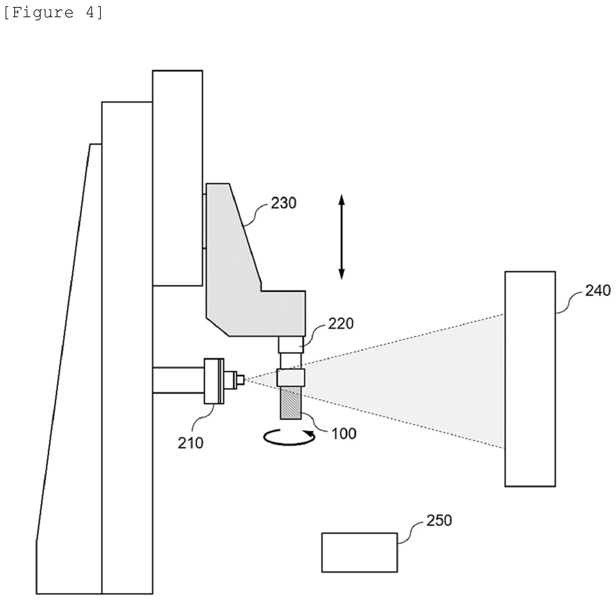

FIG. 4 is a side view of a CT device according to embodiments of the present invention.

The CT device according to embodiments of the present invention may include an X-ray irradiation unit 210, a battery gripper 220, an elevating unit 230, a detector 240, and a data processor 250.

The battery gripper 220 may grip the upper portion of the battery 100 and may sequentially rotate by a predetermined unit angle. For example, the battery gripper 220 may sequentially rotate counterclockwise by 1 degree while holding the battery 100.

The X-ray irradiation unit 210 may irradiate X-rays toward a side of the battery 100. Here, the X-ray irradiation unit 210 may irradiate X-rays toward a side of the battery 100 while the battery 100 is sequentially rotated by a unit angle.

The detector 240 may detect X-rays that have passed through the interior of the battery 100 and transmit X-ray detection data corresponding to the detected X-rays to the data processor 250.

The data processor 250 may generate CT data using the X-ray detection data received from the detector 240. Specifically, the data processor 250 may generate a plurality of (e.g., 360) slice images using X-ray detection data acquired during a process in which the battery 100 is sequentially rotated by a unit angle, and synthesize the slice images using a predefined restoration algorithm to generate CT data representing the internal shape of the battery.

In an embodiment, the battery gripper 220 may be fixedly coupled to an elevating unit 230 and may be vertically elevated by the elevating unit 230.

As illustrated in FIG. 4, the X-ray irradiation unit 210 may irradiate X-rays toward a side of the upper portion of the battery 100, so that a plurality of slice images (e.g., 360 images) of the upper portion of the battery may be acquired. Thereafter, the elevating unit 230 may be raised to a predetermined position, and the X-ray irradiation unit 210 may irradiate X-rays toward a side of the lower portion of the battery 100, so that a plurality of slice images (e.g., 360 images) of the lower portion of the battery may be acquired. Here, the data processor 250 may generate first CT data corresponding to the upper portion using the slice images of the upper portion of the battery and may generate second CT data corresponding to the lower portion using the slice images of the lower portion of the battery.

The data processor 250 may transmit the generated CT data to a battery shape inspection apparatus.

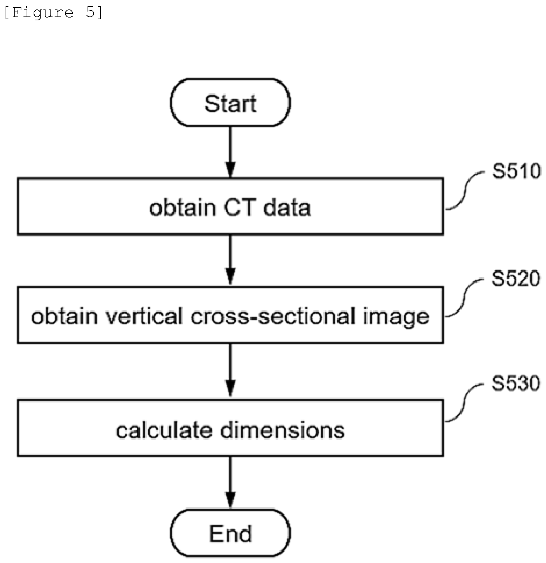

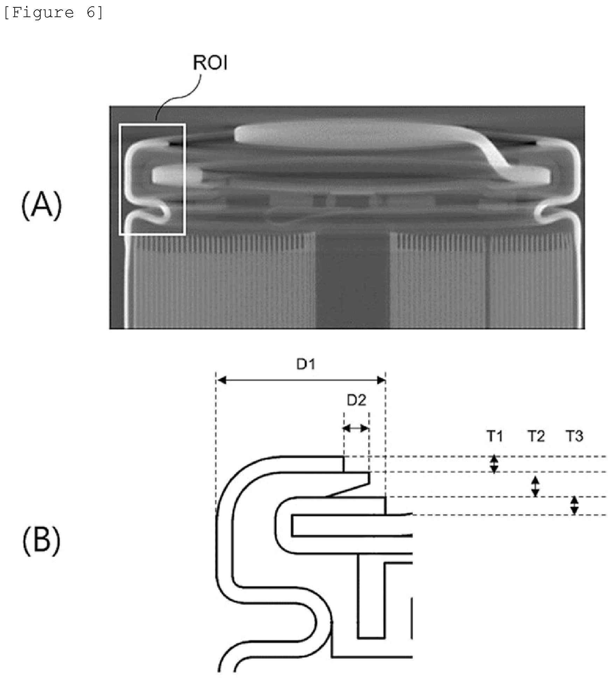

FIG. 5 is an operational flowchart of a battery shape inspection method according to an embodiment of the present invention and FIG. 6 is a reference diagram illustrating the battery shape inspection method of FIG. 5.

The battery shape inspection method according to embodiments of the present invention may be performed by a battery shape inspection apparatus that is connected to a CT device.

The battery shape inspection apparatus may obtain CT data of the battery from the CT device (S510).

The battery shape inspection apparatus may extract a vertical cross-sectional image of the battery from the CT data (S520). Here, the vertical cross-sectional image may refer to an image representing a vertical cross-section passing through the central axis of the battery.

The battery shape inspection apparatus may use the vertical cross-sectional image to calculate one or more dimensions related to the shape of the battery (S530). For example, the battery shape inspection apparatus may use the vertical cross-sectional image to calculate one or more of the following: the total height of the battery, the thickness of the crimping portion, the flatness of the crimping portion, the thickness of the gasket, the thickness of the vent, the horizontal distance between the outer side surface of the battery and the end of the vent, the horizontal length of the gasket protruding outward, and the outer diameter.

More specifically, the battery shape inspection apparatus may extract a vertical cross-sectional image ((A)of FIG. 6) of the upper portion of the battery from the first CT data corresponding to the upper portion. Here, the battery shape inspection apparatus may extract a region of interest (ROI) corresponding to a joint region of the can, the cap assembly, and the gasket from the vertical cross-sectional image.

As shown in (B) of Fig. 6, the battery shape inspection apparatus may identify a can region, a gasket region, a vent region, and a top cap region in the ROI using a predefined region segmentation algorithm. Subsequently, the battery shape inspection apparatus may calculate the thickness T1 of the crimping portion, the thickness T2 of the gasket, the thickness T3 of the vent, the horizontal distance D1 between the outer side surface of the battery and the end of the vent, and the horizontal length D2 of the gasket protruding outward.

The battery shape inspection apparatus may determine whether the battery has a shape defect by comparing the dimensions calculated in step S530 with allowable ranges predefined for each of the dimensions. For example, if the thickness T1 of the crimping portion is outside the allowable range of **a** mm or more and **b** mm or less, the battery shape inspection apparatus may classify the corresponding battery as having [defective crimping portion thickness].

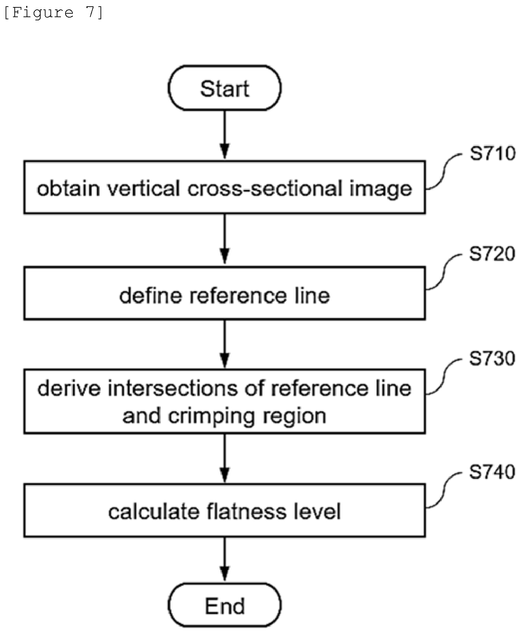

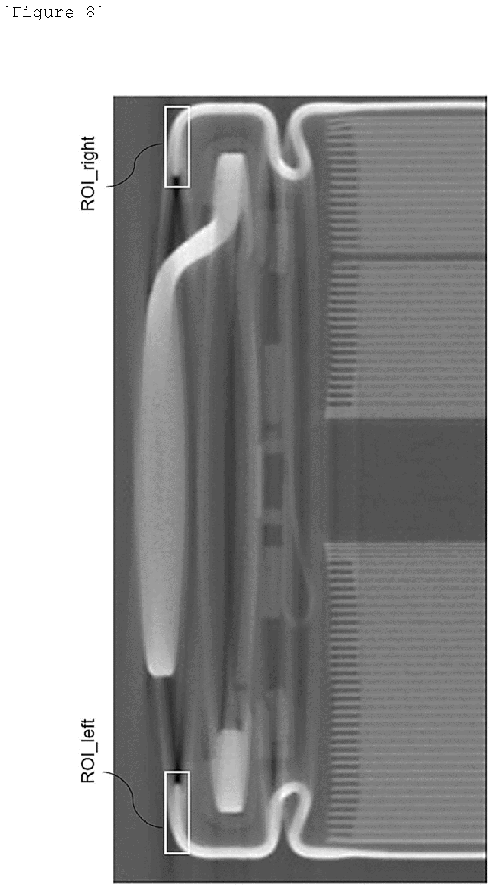

FIG. 7 is an operational flowchart of a battery shape inspection method according to another embodiment of the present invention and FIGS. 8 to 10 are reference diagrams for explaining the battery shape inspection method of FIG. 7.

The battery shape inspection apparatus may extract a vertical cross-sectional image of the battery from CT data (S710). Here, the CT data may be a first CT data corresponding to the upper portion of the battery.

The battery shape inspection apparatus may define a reference line Lref passing through the crimping region in the vertical cross-sectional image (S720). Here, the crimping region may refer to a region of the upper portion of the can that is bent horizontally toward the central axis of the can.

More specifically, the battery shape inspection apparatus may extract a vertical cross-sectional image (FIG. 8) of the upper portion of the battery from the first CT data. Thereafter, the battery shape inspection apparatus may extract a region of interest (ROI) including a crimping region from the vertical cross-sectional image. Here, the battery shape inspection apparatus may extract one or more regions of interest (ROI_left, ROI_right) corresponding to the crimping regions formed on the left and right sides, respectively.

The battery shape inspection apparatus may use a predefined edge detection algorithm to derive the outline of an area of the crimping region and define a specific point on the outline as a reference point Pref.

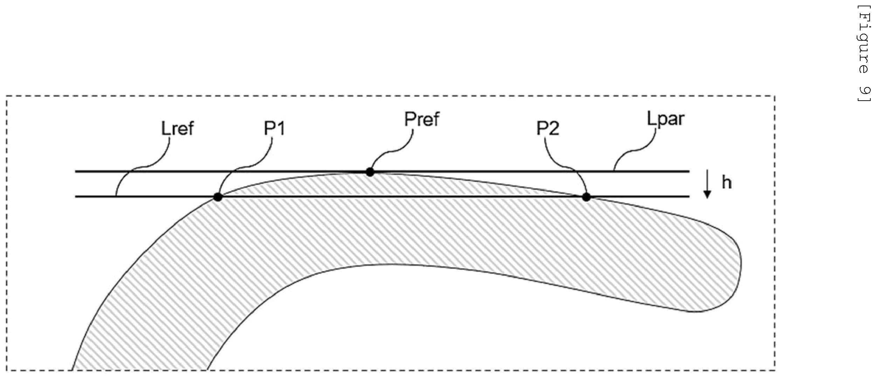

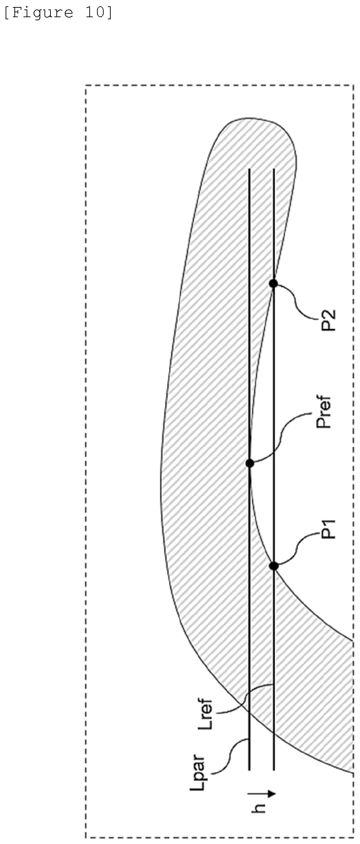

For example, the reference point Pref may be defined as the uppermost point on the outline of the upper surface of the crimping region, as illustrated in FIG. 9. Alternatively, the reference point Pref may be defined as the uppermost point on the outline of the lower surface of the crimping region, as illustrated in FIG. 10.

Thereafter, the battery shape inspection apparatus may define a parallel line Lpar that touches the reference point Pref and vertically move the parallel line Lpar by a predefined distance (h) so that the parallel line Lpar passes through an area of the crimping region. Here, the battery shape inspection apparatus may define the vertically shifted parallel line Lpar as the reference line Lref.

For example, if the reference point Pref is defined as the point located at the uppermost point of the upper surface of the crimping region, as illustrated in FIG. 9, the battery shape inspection apparatus may define a parallel line Lpar that touches the reference point Pref and define the parallel line Lpar shifted downward by the distance h (such as, 0.05 mm) as the reference line Lref.

For another example, if the reference point Pref is defined as the point located at the uppermost point of the lower surface of the crimping region, as illustrated in FIG. 10, the battery shape inspection apparatus may define a parallel line Lpar that touches the reference point Pref and define the parallel line Lpar shifted downward by the distance h (such as, 0.05 mm) as the reference line Lref.

The battery shape inspection apparatus may derive intersections of the reference line and the area of the crimping region (S730).

For example, referring to FIGS. 9 and 10, the battery shape inspection apparatus may derive a first intersection point (P1) and a second intersection point (P2), where the reference line Lref and the crimping region intersect, in a vertical cross-sectional image.

The battery shape inspection apparatus may use the intersection points derived in step S730 to calculate a flatness level of the crimping portion (S740). Here, a flatness value is lower for flatter areas, and higher for more severe bending.

The flatness of the crimping region may be calculated based on the horizontal distance between the first intersection point P1 and the second intersection point P2. Here, the flatness of the crimping region may be calculated as a lower value as the horizontal distance D_x between the first intersection point P1 and the second intersection point P2 increases, and the flatness of the crimping portion may be calculated as a higher value as the horizontal distance D_x decreases. For example, the flatness of the crimping region may be calculated (K/D_x) by multiplying the reciprocal of the horizontal distance D_x by an adjustment factor K.

In an embodiment, the battery shape inspection apparatus may calculate the flatness of one crimping portion and the flatness of the other crimping portion. For example, the battery shape inspection apparatus may calculate the flatness of the left crimping portion and the flatness of the right crimping portion, respectively. Here, the battery shape inspection apparatus may calculate a first flatness based on the upper surface of the left crimping region and a second flatness based on the lower surface of the left crimping region. Additionally, the battery shape inspection apparatus may calculate a third flatness based on the upper surface of the right crimping region and a fourth flatness based on the lower surface of the right crimping region.

The battery shape inspection apparatus may determine whether the battery is defective by comparing the flatness calculated by S740 with a preset allowable range. For example, if the flatness exceeds a preset threshold, the battery may be classified as having a "crimping portion flatness defect." For another example, if one or more of the first flatness and the third flatness exceeds a preset threshold, the corresponding battery may be classified as having a "crimping portion flatness defect." For another example, if one or more of the first flatness to the fourth flatness exceeds a preset threshold, the corresponding battery may be classified as having a "crimping portion flatness defect."

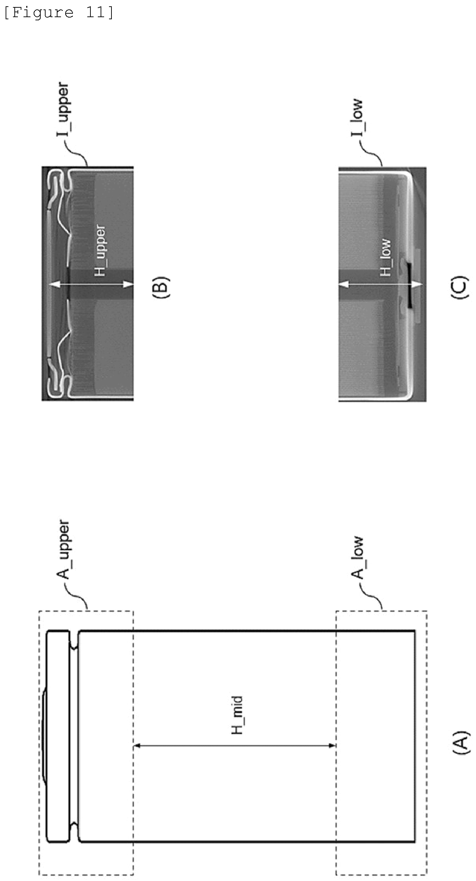

FIG. 11 is a reference diagram for explaining a battery shape inspection method according to another embodiment of the present invention.

The battery shape inspection apparatus may calculate the total height of the battery based on a first vertical cross-sectional image of the upper portion of the battery and a second vertical cross-sectional image of the lower portion of the battery.

More specifically, the CT device may use **sectional images** of the upper portion of the battery (A_upper in (A)of FIG. 11) to generate first CT data corresponding to the upper portion. Furthermore, the CT device may use **sectional images** of the lower portion of the battery (A_low in (A) of FIG. 11) to generate second CT data corresponding to the lower portion. Here, the height value (H_mid) for the central region, which is not measured by the CT device, may be pre-stored in the battery shape inspection apparatus.

The battery shape inspection apparatus may extract a first vertical cross-sectional image ((B) in FIG. 11) from a first CT image acquired from a CT device and a second vertical cross-sectional image ((C) in FIG. 11) from the second CT data.

Thereafter, the battery shape inspection apparatus may measure a first distance H_upper, which is a vertical distance of the battery region, in the first vertical cross-sectional image I_upper, and a second distance H_low, which is a vertical distance of the battery region, in the second vertical cross-sectional image I_low.

The battery shape inspection apparatus may calculate the height distance (total height) of the battery by adding a third distance H_mid, which corresponds to the height of the pre-stored central region, to the sum of the first distance H_upper and the second distance H_low (H_t = H_upper + H_low + H_mid).

In other words, the battery shape inspection apparatus may calculate the total height of the battery using first CT data corresponding to the upper portion and second CT data corresponding to the lower portion without acquiring CT data for the entire area of the battery.

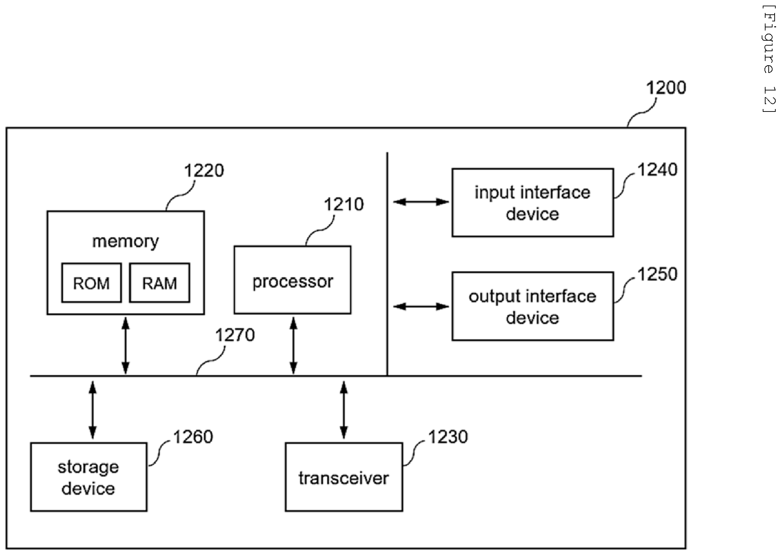

FIG. 12 is a block diagram of a battery shape inspection apparatus according to embodiments of the present invention.

The battery shape inspection apparatus 1200 according to embodiments of the present invention may be linked to a CT device.

The battery shape inspection apparatus 1200 according to embodiments of the present invention may include a processor 1210, a memory 1220 that stores at least one instruction executed through the processor, and a transceiver 1230 that is connected to a network and performs communication.

The at least one instruction may include an instruction to obtain a vertical cross-sectional image of a battery; an instruction to define a reference line passing through an area of a crimping region in the vertical cross-sectional image; and an instruction to calculate a flatness of the crimping region using intersections of the reference line and the area of the crimping region.

The instruction to obtain the vertical cross-sectional image of the battery may include an instruction to obtain computed tomography (CT) data of the battery from a computed tomographic imaging device; and an instruction to extract the vertical cross-sectional image including the area of the crimping region from the CT data.

The instruction to define the reference line may include an instruction to define a reference point on an outline of the crimping region; an instruction to define a parallel line tangent to the reference point; an instruction to vertically move the parallel line by a predetermined distance so that the parallel line passes through the area of the crimping region; and an instruction to define the vertically moved parallel line as the reference line.

The instruction to define the reference point may include an instruction to define the uppermost point on the outline of the upper surface of the crimping region as the reference point; and the instruction to vertically move the parallel line by a predetermined distance may include an instruction to move the parallel line downward by a predetermined distance.

The instruction to define the reference point may include an instruction to define the uppermost point on the outline of the lower surface of the crimping region as the reference point, and the instruction to vertically move the parallel line by a predetermined distance may include an instruction to move the parallel line downward by a predetermined distance.

The instruction to calculate the flatness may include an instruction to identify a first intersection point and a second intersection point where the reference line intersects the area of the crimping region; and an instruction to calculate the flatness based on a horizontal distance between the first intersection point and the second intersection point.

The instruction to calculate the flatness may include an instruction to calculate a flatness of one part of the crimping region; and an instruction to calculate a flatness of the other part of the crimping region.

The at least one instruction may further include an instruction to determine whether the battery is defective based on whether the calculated flatness exceeds a predetermined allowable range.

The at least one instruction may further include an instruction to acquire a first vertical cross-sectional image of an upper portion of the battery and a second vertical cross-sectional image of a lower portion of the battery; an instruction to measure a first distance, which is a vertical distance of a battery portion, in the first vertical cross-sectional image, and a second distance, which is a vertical distance of the battery portion, in the second vertical cross-sectional image; and an instruction to calculate a height distance of the battery by adding a pre-stored third distance corresponding to a central portion of the battery to the sum of the first and second distances.

Meanwhile, the battery shape inspection apparatus 1200 may further include an input interface device 1240, an output interface device 1250, a storage device 1260, etc. Respective components included in the battery shape inspection apparatus 1200 may be connected by a bus 1270 and can communicate with each other.

Here, the processor 1210 may mean a central processing unit (CPU), a graphics processing unit (GPU), or a dedicated processor on which methods according to embodiments of the present invention are performed. In addition, the memory may include at least one of a volatile/transitory storage medium and a non-volatile/non-transitory storage medium. For example, the memory may include at least one of read only memory (ROM) and random access memory (RAM), and may include electrically erasable programmable read-only Memory (EEPROM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

The operations of the method according to embodiments of the present invention may be implemented in various forms related to programs, such as a computer program or code itself, or a computer program product.

Furthermore, the computer-readable recording medium may include one or more of a volatile/transitory recording medium and a non-volatile/non-transitory recording medium.

In addition, the computer-readable recording medium may include hardware devices specially configured to store and execute program instructions, such as ROM, RAM, flash memory, and may include, for example, various types of servers located on a network. The program instructions may include not only machine language codes, such as those created by a compiler, but also high-level language codes that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A battery shape inspection apparatus comprising:
at least one processor; and
a memory configured to store at least one instruction executed by the at least one processor,
wherein the at least one instruction includes:
an instruction to obtain a vertical cross-sectional image of a battery;
an instruction to define a reference line passing through an area of a crimping region in the vertical cross-sectional image; and
an instruction to calculate a flatness of the crimping region using intersections of the reference line and the area of the crimping region.

2. The battery shape inspection apparatus of claim 1, wherein the instruction to obtain the vertical cross-sectional image of the battery includes:
an instruction to obtain computed tomography data of the battery from a computed tomographic imaging device; and
an instruction to extract the vertical cross-sectional image including the area of the crimping region from the computed tomography data.

3. The battery shape inspection apparatus of claim 1, wherein the instruction to define the reference line includes:
an instruction to define a reference point on an outline of the crimping region;
an instruction to define a parallel line tangent to the reference point;
an instruction to vertically move the parallel line by a predetermined distance so that the parallel line passes through the area of the crimping region; and
an instruction to define the vertically moved parallel line as the reference line.

4. The battery shape inspection apparatus of claim 3, wherein the instruction to define the reference point includes:
an instruction to define the uppermost point on the outline of the upper surface of the crimping region as the reference point; and
wherein the instruction to vertically move the parallel line by a predetermined distance includes:
an instruction to move the parallel line downward by a predetermined distance.

5. The battery shape inspection apparatus of claim 3, wherein the instruction to define the reference point includes:
an instruction to define the uppermost point on the outline of the lower surface of the crimping region as the reference point; and
wherein the instruction to vertically move the parallel line by a predetermined distance includes:
an instruction to move the parallel line downward by a predetermined distance.

6. The battery shape inspection apparatus of claim 1, wherein the instruction to calculate the flatness includes:
an instruction to identify a first intersection point and a second intersection point where the reference line intersects the area of the crimping region; and
an instruction to calculate the flatness based on a horizontal distance between the first intersection point and the second intersection point.

7. The battery shape inspection apparatus of claim 1, wherein the instruction to calculate the flatness includes:
an instruction to calculate a flatness of one part of the crimping region; and
an instruction to calculate a flatness of the other part of the crimping region.

8. The battery shape inspection apparatus of claim 1, wherein the at least one instruction further includes:
an instruction to determine whether the battery is defective based on whether the calculated flatness exceeds a predetermined allowable range.

9. The battery shape inspection apparatus of claim 1, wherein the at least one instruction further includes:
an instruction to acquire a first vertical cross-sectional image of an upper portion of the battery and a second vertical cross-sectional image of a lower portion of the battery;
an instruction to measure a first distance, which is a vertical distance of a battery portion, in the first vertical cross-sectional image, and a second distance, which is a vertical distance of the battery portion, in the second vertical cross-sectional image; and
an instruction to calculate a height distance of the battery by adding a pre-stored third distance corresponding to a central portion of the battery to the sum of the first and second distances.

10. A battery shape inspection method for inspecting battery shape by a battery shape inspection apparatus, the battery shape inspection method comprising:
a step of obtaining a vertical cross-sectional image of a battery;
a step of defining a reference line passing through an area of a crimping region in the vertical cross-sectional image; and
a step of calculating a flatness of the crimping region using intersections of the reference line and the area of the crimping region.

11. The battery shape inspection method of claim 10, wherein the step of obtaining of the vertical cross-sectional image of the battery includes:
a step of obtaining computed tomography data of the battery from a computed tomographic imaging device; and
a step of extracting the vertical cross-sectional image including the area of the crimping region from the computed tomography data.

12. The battery shape inspection method of claim 10, wherein the step of defining of the reference line includes:
a step of defining a reference point on an outline of the crimping region;
a step of defining a parallel line tangent to the reference point;
a step of vertically moving the parallel line by a predetermined distance so that the parallel line passes through the area of the crimping region; and
a step of defining the vertically moved parallel line as the reference line.

13. The battery shape inspection method of claim 12, wherein the step of defining of the reference point includes:
a step of defining the uppermost point on the outline of the upper surface of the crimping region as the reference point; and
wherein the step of vertically moving of the parallel line by a predetermined distance includes:
a step of moving the parallel line downward by a predetermined distance.

14. The battery shape inspection method of claim 12, wherein the step of defining of the reference point includes:
a step of defining the uppermost point on the outline of the lower surface of the crimping region as the reference point; and
wherein the step of vertically moving of the parallel line by a predetermined distance includes:
a step of moving the parallel line downward by a predetermined distance.

15. The battery shape inspection method of claim 10, wherein the step of calculating of the flatness includes:
a step of identifying a first intersection point and a second intersection point where the reference line intersects the area of the crimping region; and
a step of calculating the flatness based on a horizontal distance between the first intersection point and the second intersection point.

16. The battery shape inspection method of claim 10, wherein the step of calculating of the flatness includes:
a step of calculating a flatness of one part of the crimping region; and
a step of calculating a flatness of the other part of the crimping region.

17. The battery shape inspection method of claim 10, further comprising:
a step of determining whether the battery is defective based on whether the calculated flatness exceeds a predetermined allowable range.

18. The battery shape inspection method of claim 10, further comprising:
a step of acquiring a first vertical cross-sectional image of an upper portion of the battery and a second vertical cross-sectional image of a lower portion of the battery;
a step of measuring a first distance, which is a vertical distance of a battery portion, in the first vertical cross-sectional image, and a second distance, which is a vertical distance of the battery portion, in the second vertical cross-sectional image; and
a step of calculating a height distance of the battery by adding a pre-stored third distance corresponding to a central portion of the battery to the sum of the first and second distances.

19. A battery shape inspection system comprising:
a computed tomographic imaging device configured to generate computed tomographic data of a battery; and
a battery shape inspection apparatus configured to obtain the computed tomographic data from the computed tomographic imaging device, calculate one or more dimensions related to the shape of the battery using a vertical cross-sectional image extracted from the computed tomographic data, and determine whether the battery has a shape defect based on the calculated dimensions,
wherein the battery shape inspection apparatus defines a reference line passing through an area of a crimping region in the vertical cross-sectional image and calculates a flatness of the crimping region using intersections of the reference line and the area of the crimping region.
